(19) Europäisches Patentamt
European Patent Office
Office européen des brevets

(11) EP 4 097 206 B1

(12) # EUROPEAN PATENT SPECIFICATION

(45) Date of publication and mention of the grant of the patent:
**09.08.2023 Bulletin 2023/32**

(21) Application number: **20803593.1**

(22) Date of filing: **13.11.2020**

(51) International Patent Classification (IPC):
***C11D 3/386*** *(2006.01)* ***C11D 3/40*** *(2006.01)*
***C11D 11/00*** *(2006.01)* ***C11D 17/00*** *(2006.01)*
***C11D 17/04*** *(2006.01)*

(52) Cooperative Patent Classification (CPC):
**C11D 3/40; C11D 3/33; C11D 3/349;**
**C11D 11/0094; C11D 17/0008; C11D 17/041;**
Y02W 30/62

(86) International application number:
**PCT/EP2020/082017**

(87) International publication number:
**WO 2021/151536 (05.08.2021 Gazette 2021/31)**

(54) **LAUNDRY DETERGENT PRODUCT**

WASCHMITTELPRODUKT

PRODUIT DE DÉTERGENT POUR LESSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2020 EP 20154288**
**29.01.2020 EP 20154286**
**29.01.2020 EP 20154292**

(43) Date of publication of application:
**07.12.2022 Bulletin 2022/49**

(73) Proprietors:
- **Unilever IP Holdings B.V.**
**3013 AL Rotterdam (NL)**
Designated Contracting States:
**AL AT BE BG CH CZ DK EE ES FI FR GR HR HU IS LI LT LU LV MC MK NL NO PL PT RO SE SI SK SM**
- **Unilever Global IP Limited**
**Wirral, Merseyside CH62 4ZD (GB)**
Designated Contracting States:
**CY DE GB IE IT MT RS TR**

(72) Inventors:
- **AMBRE, Avinash, Shantaram**
**Mumbai 400 099 (IN)**
- **BATCHELOR, Stephen, Norman**
**Wirral Merseyside CH63 3JW (GB)**
- **PERKINS, Robert, David**
**Wirral Merseyside CH63 3JW (GB)**
- **NURANI PADMANABHAN, Sambhamurthy**
**Mumbai 400 099 (IN)**
- **THOMAS, Matthew, Rhys**
**Wirral Merseyside CH63 3JW (GB)**

(74) Representative: **Brooijmans, Rob Josephina Wilhelmus**
**Unilever Patent Group**
**Bronland 14**
**6708 WH Wageningen (NL)**

(56) References cited:
**WO-A1-00/36068** **WO-A1-02/02727**
**WO-A2-2007/145963**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 097 206 B1

## Description

### Field of the invention

The present invention relates to a plastic transparent container comprising an aqueous liquid laundry detergent composition, wherein the aqueous liquid laundry detergent composition comprises an anthraquinone based dye and an amylase and/or a protease. The invention further relates to a process for making the same using (in part) recycled plastic.

### Background of the invention

Plastics, especially synthetic plastics, are ubiquitous in daily life due to their relatively low production costs and good balance of material properties. Synthetic plastics are used widely to make containers (e.g. bottles) for liquid laundry detergent products. The overwhelming majority of synthetic plastics are produced from increasingly scarce fossil sources, such as petroleum and natural gas. Additionally, the manufacturing of synthetic plastics from fossil sources produces $CO_2$ as a by-product. Plastics recycling has emerged as one solution to mitigate the issues associated with the widespread usage of plastics. Reclaiming plastics and re-using reclaimed plastics diverts waste from landfills and reduces the demand for virgin plastics made from fossil-based resources, which consequently reduces greenhouse gas emissions and other environmental problems.

The recycling process of reclaimed plastic typically consists of sorting the reclaimed plastics into predominately uniform streams of plastic types (e.g. PET, PVC etc...), washing with aqueous and/or caustic solutions and reprocessing into a plastic pellet, which can be used as plastic feed to form new plastic products. On general problem with using plastic feeds derived from recycled plastic is that these often are contaminated with unwanted impurities, such as spoiled food residue, residual perfume and colorants. In particular, reclaimed opaque plastics provide high levels of colorant impurities in the plastic feeds derived from recycled plastic (e.g. dyes and pigments). One way of reducing the level of impurities in the plastic feeds derived from recycled plastic is to decrease the amount of opaque plastics in the reclaimed plastic. Concomitantly there is a need to reduce the amount of opaque plastics in consumer products in favor of transparent (or translucent) plastics, which include plastic transparent containers for storing/transporting/dosing of liquid laundry compositions.

Furthermore, transparent containers (e.g. bottles) for liquid laundry products are also desired as these allow the consumer to inspect the color of the product, its consistency and any suspended particles if present.

As a further consideration, reclaimed plastics based on polyethylene terephthalate (PET) and high-density polyethylene (HDPE) are currently more efficiently and more completely recyclable compared to other types of plastic, such as those based on polyvinyl chloride (PVC), polypropylene (PP), polystyrene (PS) or polymethylmethacrylate (PMMA) (Rahimi et. al. Chemical recycling of waste plastics for new materials production. Nature Reviews Chemistry, 2017, Vol. 1, Art. No. 0046).

However, transparent plastic containers, such as made from PET and/or HDPE present problems when used to store aqueous liquid laundry detergent compositions comprising amylase (i.e. an enzyme that catalyzes the hydrolysis of starch into sugars) and/or protease (i.e. an enzyme that catalyzes the hydrolysis of bonds within peptides and proteins). It was observed that upon exposure to sunlight of such products, the enzyme activity of the amylase and/or protease is reduced over time. The transparent plastic containers used to hold liquid laundry compositions considered here typically take the form of dispensing-by-pouring bottles and are not to be confused with water-soluble film-wrapped unit-dose products. Such unit dose products are typically packaged in non-transparent (carton-based) boxes and are not typically exposed to sunlight during storage or transport and for which the problem of reduced amylase/protease activity upon exposure to sunlight is not relevant.

It is an object of the present invention to provide a transparent plastic (dispensing) container, having an internal volume of from 0.1 to 10 L, preferably made from PET and/or HOPE, comprising an aqueous liquid laundry detergent composition comprising amylase and/or protease, wherein the activity of the amylase and/or protease is less reduced upon exposure of the product to sunlight.

US2007/0267444A1 discusses the need for a consumer product which is convenient and easy to use which is aesthetically appealing to consumers which will resist the destruction by UV light of the container and/or the components of any composition therein. It discloses use of a UV absorbing material in the container wall, one or more polymeric labels and/or in the composition itself. The UV absorbing material mentioned is selected from UV absorbers, fluorescent dyes and mixtures thereof.

WO 00/36068 discloses a transparent or translucent aqueous heavy duty liquid composition in a transparent bottle, the composition comprising surfactant, enzymes and fluorescent dye and/or UV, absorber.

## Summary of the invention

One or more objects of the above objects are achieved in a first aspect of the invention by a transparent plastic container, preferably comprising from 50 to 100 wt. % of recycled plastic, based on the total weight of the container-plastic (i.e. the plastic comprised by the container), comprising an aqueous liquid laundry detergent composition wherein the liquid detergent composition comprises:

- from 5 to 60 wt. % of surfactant; and
- from of 0.0005 to 0.01 wt.% of an amylase or from 0.0005 to 0.01 wt.% of a protease or a combination thereof; and
- from 0.00005 to 0.02 wt. % of a dye comprising an anthraquinone chromophore which contains an amine group or an acid amide group in the 1-position of the anthraquinone ring; and

wherein the container has an internal volume of from 0.1 to 10 L.

It was surprisingly observed that use of from 0.00005 to 0.02 wt. % of a dye comprising an anthraquinone chromophore which contains an amine group or an acid amide group in the 1-position of the anthraquinone ring significantly reduces the loss of amylase and protease activity upon exposure to sunlight.

Consumers nowadays have a growing environmental awareness and are more inclined to use aqueous liquid laundry compositions when in plastic containers which are at least in part made from recycled plastics. As such, preferably the plastic material of the transparent plastic container of the invention is made from 50 to 100 wt. % of recycled plastic and from 0 to 50 wt. % of virgin plastic. Advantageously the transparent plastic container is marked by one or more symbols, letters and/or numbers identifying the amount of recycled plastic comprised by the transparent plastic container. Moreover, preferably the transparent plastic container is marked by one or more symbols, letters and/or numbers identifying the plastic container is recyclable. The technical benefits afforded by such identifiers is to affect consumer behavior in a manner to reduce the level of impurities in the plastic feeds derived from recycled plastic by decreasing the relative amount of opaque plastic of the reclaimed plastic stream. This concomitantly decreases the world-demand for virgin plastics with all the associated environmental benefits thereof.

In a second aspect the invention relates to a process for the manufacture of a transparent plastic container comprising an aqueous liquid laundry detergent composition according to the first aspect of the invention, wherein the process comprises the steps of:

a) providing a plastic transparent container having an internal volume of from 0.1 to 10 L, wherein the plastic preferably comprises from 50 to 100 wt. % of recycled plastic, based on the total weight of the plastic;
b) providing an aqueous liquid laundry detergent composition according to the first aspect of the invention;
c) filling the container provided at step a) with the aqueous liquid laundry detergent composition provided at step b) to provide the transparent plastic container comprising an aqueous liquid laundry detergent composition.

It is also disclosed the use of the aqueous liquid laundry detergent composition according to the invention to reduce loss of amylase enzyme activity, to reduce loss of protease enzyme activity or to reduce loss of amylase and protease enzyme activity, when stored in a plastic transparent container upon exposure to sunlight. Preferably when stored in a transparent plastic container wherein the plastic comprises from 50 to 100 wt. % of recycled plastic.

## Detailed description of the invention

<u>Definitions</u>

Unless otherwise stated or is made clear from the context, with 'the composition' is meant the aqueous liquid laundry detergent composition as such, not including the container; with 'the container' is meant the plastic transparent container as such, not including the aqueous liquid laundry detergent composition; with 'the product' is meant the plastic transparent container + the aqueous liquid laundry detergent composition contained therein. Weight percentage (wt. %) is based on the total weight of the aqueous liquid laundry detergent composition, the container, or the product as indicated or as made clear from the context. It will be appreciated that the total weight amount of ingredients will not exceed 100 wt. %.

Amounts of wt. % enzymes in the aqueous liquid laundry composition refer to wt. % of active protein levels, unless otherwise indicated.

Whenever an amount or concentration of a component is quantified herein, unless indicated otherwise, the quantified amount or quantified concentration relates to said component per se, even though it may be common practice to add such a component in the form of a solution or of a blend with one or more other ingredients. It is furthermore to be understood that the verb "to comprise" and its conjugations is used in its non-limiting sense to mean that items following the word are included, but items not specifically mentioned are not excluded. Finally, reference to an element

by the indefinite article "a" or "an" does not exclude the possibility that more than one of the elements is present, unless the context clearly requires that there be one and only one of the elements. The indefinite article "a" or "an" thus usually means "at least one". Unless otherwise specified all measurements are taken at standard conditions. Whenever a parameter, such as a concentration or a ratio, is said to be less than a certain upper limit it should be understood that in the absence of a specified lower limit the lower limit for said parameter is 0.

The plastic container of the invention is transparent. The term 'transparent' as used herein refers to the ability of light within the visible spectrum (400 to 700 nm) to pass through the container wall. The transparency can be quantified as the ratio between the light intensity measured after the light has passed through a material sample and the light intensity measured when the material sample has been removed. The ratio (i.e. x100) can be converted to a Transmittance ranging from 0% (no incoming light having passed through) to 100% (i.e. all incoming light having passed through). As used herein transparent refers to a Transmittance of at least 20% within the wavelength range of 400 to 700 nm, preferably of at least 30 %, 40 %, 50 % and more preferably at least 60 %. The Transmittance refers to at least one wavelength of light within the visible spectrum, preferably to at least 40 %, more preferably at least 60%, even more preferably at least 80 % of the wavelengths within the visible spectrum, still even more preferably refers to the whole of the wavelength within the visible spectrum. Preferably at least 30 %, 50 %, 70 % and even more preferably at least 85 % of the total outer container surface of the plastic container is transparent.

A label carrying product information may be applied onto the outside of the transparent container surface. The label is advantageously in part non-transparent to improve readability of any information thereon. Application of such labels is to communicate information about the product to the consumer, some of which information is necessitated by law or regulation. The label can be applied as a heat-shrinkable sleeve, a suitable sticker, or in any other suitable manner. It is advantageous that the label, if present, is thin, meaning it has a thickness of from 0.01 to 2 mm and is itself made from a recyclable plastic. More preferably the label does not reduce the transparent surface area of the plastic transparent container by more than 50 %, preferably by no more than 30 % and even more preferably by no more than 20 %.

Dyes comprised by the aqueous liquid laundry detergent composition

The aqueous liquid laundry detergent composition of the invention comprises from 0.00005 to 0.02 wt. % of a dye comprising an anthraquinone chromophore which contains an amine group or an acid amide group in the 1-position of the anthraquinone ring. The general structure of the anthraquinone dye with the positions of the ring indicated is given by the following structure:

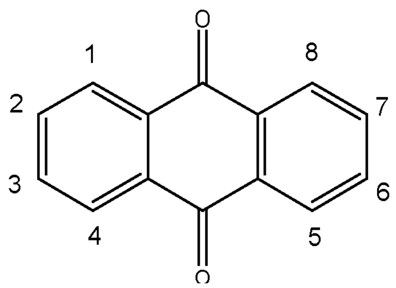

Advantageously the amount of the anthraquinone dye of the invention in the aqueous liquid laundry composition of the invention is from 0.0001 to 0.01 wt. %, more preferably from 0.0001 to 0.005 wt. %.

In general, in case of anionic dyes, the wt. % is based on their sodium salt form.

Suitable dyes are listed in the Colour index (© Society of Dyers and Colourists & AATCC), preferably under the designation of Acid Green, Acid Blue and Acid violet dyes.

The dye of the invention may be alkoxylated, preferably ethoxylated and be covalently bound to a $(CH_2CH_2O)_n$ chain where n is the mole average value and n is from 2 to 8. Preferably the $(CH_2CH_2O)_n$ chain is bound to an amine of the dye.

Preferably the dye of the invention comprises one or more of Solvent violet 13, Disperse Violet 1, Disperse Violet 4, Disperse Violet 6, Disperse Violet 8, Disperse Violet 17, Disperse Violet 23, Disperse Violet 26, Disperse Violet 28, Disperse violet 28, Disperse violet 57, Disperse violet 62, Disperse Blue 1, Disperse Blue 3, Disperse Blue 5, Disperse Blue 6, , Disperse Blue 7, Disperse Blue 8, Disperse Blue 9, Disperse Blue 14, , Disperse Blue 19, Disperse Blue 22, Disperse Blue 23, Disperse Blue 24, Disperse Blue 26, Disperse Blue 27, Disperse Blue 28, Disperse Blue34, Disperse Blue 40, Disperse Blue 56, Disperse Blue 72, , Disperse Blue 73, Disperse Blue 77, Disperse Blue 81, Disperse Blue 83, Disperse Blue 87, Disperse Blue 104, Disperse Blue 109, Disperse Blue 118, Disperse Blue 127, Disperse Blue 134, Disperse Blue 377, Acid Violet 41, Acid violet 42, Acid violet 43, Acid violet 48, Acid violet 51 Acid Green 25, Acid

Blue 23, Acid blue 25, Acid Blue 27, Acid blue 40, Acid Blue 43, Acid Blue 47, Acid Blue 49, Acid Blue 51, Acid Blue 53, Acid Blue 55, Acid Blue 56, Acid Blue 62, Acid Blue 68, Acid Blue 69, Acid Blue 78, Acid Blue 80, Acid Blue 81:1, Acid Blue, Acid Blue 96, Acid Blue 124, Acid Blue 128, Acid Blue 129, Acid Blue 175, Acid Blue 215, Acid Blue 230, Acid Blue 277, Acid Green 25 and Acid Green 41. The dye names refer to the Colour Index™ Generic Name, published by the Society of Dyers and Colourists (SDC) and American Association of Textile Chemists and Colourists (AATCC). Of the above dyes Acid green 25, Acid blue 80, solvent Violet 13, Disperse Violet 28 and Acid Violet 43 or combinations thereof are particularly preferred.

Beneficially the dye of the invention is sulphonated and more preferred dyes in this sense are 1-aminoanthraquinone-2-sulfonic acid, diaminodihydroxyanthraquinonesulfonic acids, 1,4-diaminoanthraquinones with external sulfonic acid groups as described in Industrial Dyes: Chemistry, Properties, Applications (Wiley-VCH 2003) edited by Klaus Hunger.

Preferably the dye of the invention is added to the aqueous liquid laundry detergent in amount to provide an optical density of from 0.05 to 2 and preferably of from 0.1 to 0.5, as measured at the absorption maximum of the dye and using a path-length of 1 cm. The absorption maximum of dyes should be within the range of from 400-700nm. Most preferred dye of the invention are those that provide a violet, blue or green colour (alone or in combination with optional further dyes) to the aqueous liquid detergent composition. Any further dyes are also preferably dyes which comprise an anthraquinone chromophore which contains an amine group or an acid amide group in the 1-position of the anthraquinone ring. Advantageously the dye according to the invention is a violet, blue or green dye.

## Shading dyes

Preferably the aqueous liquid detergent composition according to the invention further comprises shading dye. Shading dyes provide a shade to white fabric and preferably provide a blue or violet shade to white fabric. In this regard the shading dye gives a blue or violet color to a white cloth with a hue angle of 240 to 330, more preferably 260 to 320, most preferably 265 to 300. The white cloth used is bleached non-mercerised woven cotton sheeting. Preferably a 10 cm by 10 cm piece of white bleached non-mercerised woven cotton cloth is agitated in an aqueous solution (6° French Hard water, liquor 298K: cloth 30:1) 2g/L of a base detergent (10 wt. % linear alkyl benzene sulfonate, 5 wt.% primary alcohol ethoxylate (C12-15, with 7 moles of ethoxy groups), pH=8) for 30 minutes at room temperature. The cloths are removed, rinsed and tumble dried. The experiment is repeated with and without the addition of shading dye. The color of the cloth is measured using a reflectometer and expressed as the CIE L*a*b* values. The experiment was repeated with the addition of 0.001 wt. % of the dye to the formulation.

The total color added to the cloth was calculated as the $\Delta E$ value, such that

$$\Delta E = (\Delta L^2 + \Delta a^2 + \Delta b^2)^{0.5}$$

where $\Delta L$ = L(control)-L(dye); $\Delta a$ = a(control)-a(dye); $\Delta b$ = b(control)-b(dye)

The actual color of the cloth was calculated as the hue angle, which for the current range of colors is given by: Hue angle = $270+180/\pi \times \mathrm{atan}(-\Delta a/\Delta b)$

A hue angle of 360/0 is red, 270 is blue and 180 is green.

A shading dye according to the invention is a shading dye which means it is able to deposit onto textile during domestic wash conditions in the presence of a wash liquor comprising surfactant. This may be assessed using the above test, where a shading dye will give a non-zero $\Delta E$ value.

The shading dye preferably contains a chromophore selected from the following chromophore classes: anthraquinone, azo, oxazine, azine, triphenodioxazine, triphenyl methane, xanthene and phthalocyanin, more preferably azo and anthraquinone most preferably mono-azo or bis-azo. Preferably the shading dye chromophore is a mono-azo or bis-azo dye, ethoxylated mono azo thiophene dye, solvent violet 13, disperse violet 28, direct violet 9, direct violet 99, direct violet 35, acid violet 50 or combinations thereof.

## Amylase

The amylase, when present, is present in an amount of active protein at a level of 0.0005 to 0.01 wt.%, preferably 0.001 to 0.005 wt. %.

Suitable amylases may be an alpha-amylase or a glucoamylase and may be of bacterial or fungal origin. Chemically modified or protein engineered mutants are included. Preferred are alpha-amylases. Amylases include, for example, alpha-amylases obtained from *Bacillus,* e.g., a special strain of *Bacillus licheniformis,* described in more detail in GB 1,296,839 or the *Bacillus* sp. strains disclosed in WO 95/026397 or WO 00/060060.

Preferred amylases include:

a) amylases having SEQ ID NO: 2 in WO 95/10603 or variants having 90% sequence identity to SEQ ID NO: 2 thereof. Beneficial variants are described in WO 94/02597, WO 94/18314, WO 97/43424 and SEQ ID NO: 4 of WO 99/019467, such as variants with substitutions in one or more of the following positions: 15, 23, 105, 106, 124, 128, 133, 154, 156, 178, 179, 181, 188, 190, 197, 201 , 202, 207, 208, 209, 211, 243, 264, 304, 305, 391 , 408, and 444. Further beneficial amylases include amylases having SEQ ID NO: 6 in WO 02/010355 or variants thereof having 90% sequence identity to SEQ ID NO: 6. Preferred variants of SEQ ID NO: 6 are those having a deletion in positions 181 and 182 and a substitution in position 193.

b) hybrid alpha-amylase comprising residues 1-33 of the alpha-amylase derived from *B. amyloliquefaciens* shown in SEQ ID NO: 6 of WO 2006/066594 and residues 36-483 of the *B. licheniformis* alpha-amylase shown in SEQ ID NO: 4 of WO 2006/066594 or variants having 90% sequence identity thereof. Preferred variants of this hybrid alpha-amylase are those having a substitution, a deletion or an insertion in one of more of the following positions: G48, T49, G107, H156, A181, N190, M197, 1201, A209 and Q264. Most preferred variants of the hybrid alpha-amylase comprising residues 1-33 of the alpha-amylase derived from *B. amyloliquefaciens* shown in SEQ ID NO: 6 of WO 2006/066594 and residues 36-483 of SEQ ID NO: 4 are those having the substitutions: M197T; H156Y+A181T+N190F+A209V+Q264S; or G48A+T49I+G107A+H156Y+A181T+N190F+I201 F+A209V+Q264S.

c) amylases having SEQ ID NO: 6 in WO 99/019467 or variants thereof having 90% sequence identity to SEQ ID NO: 6. Preferred variants of SEQ ID NO: 6 are those having a substitution, a deletion or an insertion in one or more of the following positions: R181, G182, H183, G184, N195, I206, E212, E216 and K269. Particularly preferred amylases are those having deletion in positions R181 and G182, or positions H183 and G184. Additional advantageous amylases which can be used are those having SEQ ID NO: 1 , SEQ ID NO: 3, SEQ ID NO: 2 or SEQ ID NO: 7 of WO 96/023873 or variants thereof having 90% sequence identity to SEQ ID NO: 1 , SEQ ID NO: 2, SEQ ID NO: 3 or SEQ ID NO: 7. Preferred variants of SEQ ID NO: 1 , SEQ ID NO: 2, SEQ ID NO: 3 or SEQ ID NO: 7 are those having a substitution, a deletion or an insertion in one or more of the following positions: 140, 181, 182, 183, 184, 195, 206, 212, 243, 260, 269, 304 and 476, using SEQ ID 2 of WO 96/023873 for numbering. More preferred variants are those having a deletion in two positions selected from 181, 182, 183 and 184, such as 181 and 182, 182 and 183, or positions 183 and 184. Most preferred amylase variants of SEQ ID NO: 1, SEQ ID NO: 2 or SEQ ID NO: 7 are those having a deletion in positions 183 and 184 and a substitution in one or more of positions 140, 195, 206, 243, 260, 304 and 476.

d) amylases having SEQ ID NO: 2 of WO 08/153815, SEQ ID NO: 10 in WO 01/66712 or variants thereof having 90% sequence identity to SEQ ID NO: 2 of WO 08/153815 or 90% sequence identity to SEQ ID NO: 10 in WO 01/66712. Preferred variants of SEQ ID NO: 10 in WO 01/66712 are those having a substitution, a deletion or an insertion in one of more of the following positions: 176, 177, 178, 179, 190, 201, 207, 211 and 264.

e) amylases having SEQ ID NO: 2 of WO 09/061380 or variants having 90% sequence identity to SEQ ID NO: 2 thereof. Preferred variants of SEQ ID NO: 2 are those having a truncation of the C-terminus and/or a substitution, a deletion or an insertion in one of more of the following positions: Q87, Q98, S125, N128, T131, T165, K178, R180, S181, T182, G183, M201 , F202, N225, S243, N272, N282, Y305, R309, D319, Q320, Q359, K444 and G475. More preferred variants of SEQ ID NO: 2 are those having the substitution in one of more of the following positions: Q87E,R, Q98R, S125A, N128C, T131 I, T165I, K178L, T182G, M201 L, F202Y, N225E,R, N272E,R, S243Q,A,E,D, Y305R, R309A, Q320R, Q359E, K444E and G475K and/or deletion in position R180 and/or S181 or of T182 and/or G183. Most preferred amylase variants of SEQ ID NO: 2 are those having the substitutions: N128C+K178L+T182G+Y305R+G475K; N 128C+ K 178L + T182G+ F202Y + Y305R+ 0319T +G4 75K; S125A+N128C+K178L+T182G+Y305R+G475K; or S125A+N128C+T1311+T165I+K178L+T182G+Y305R+G475K wherein the variants are C-terminally truncated and optionally further comprises a substitution at position 243 and/or a deletion at position 180 and/or position 181.

f) alpha-amylase having SEQ ID NO: 12 in WO01/66712 or a variant having at least 90% sequence identity to SEQ ID NO: 12. Preferred amylase variants are those having a substitution, a deletion or an insertion in one of more of the following positions of SEQ ID NO: 12 in WO01/66712: R28, R118, N174; R181, G182, D183, G184, G186, W189, N195, M202, Y298, N299, K302, S303, N306, R310, N314; R320, H324, E345, Y396, R400, W439, R444, N445, K446, Q449, R458, N471, N484. Particular preferred amylases include variants having a deletion of D183 and G184 and having the substitutions R1 18K, N195F, R320K and R458K, and a variant additionally having substitutions in one or more position selected from the group: M9, G149, G182, G186, M202, T257, Y295, N299, M323, E345 and A339, most preferred a variant that additionally has substitutions in all these positions.

Other examples are amylase variants such as those described in WO2011/098531, WO2013/001078 and WO2013/001087. Advantageous amylases are also sold under the tradenames Duramyl™, Termamyl™, Fungamyl™, Stainzyme™, Stainzyme Plus™, Natalase™, Amplify Prime® and BAN™ (from Novozymes A/S), and Rapidase™, Purastar™/Effectenz™, Powerase™, Preferenz S1000™ Preferenz S1 10™ and Preferenz S100™ (from Genencor International Inc./DuPont). The Amplify Prime® amylase is most advantageous of the commercial amylase enzyme.

Protease

The protease of the invention, when present, is present at a level of from 0.0005 to 0.01 wt.% preferably of from 0.005 to 0.05 wt. %, more preferably of from 0.01 to 0.03 wt. %.
Protease enzymes hydrolyse bonds within peptides and proteins, in the laundry context this leads to enhanced removal of protein or peptide containing stains.
Examples of suitable proteases families include aspartic proteases; cysteine proteases; glutamic proteases; asparagine peptide lyase; serine proteases and threonine proteases. Such protease families are described in the MEROPS peptidase database (http://merops.sanger.ac.uk/). Serine proteases are preferred. Subtilase type serine proteases are more preferred. The term "subtilases" refers to a sub-group of serine protease according to Siezen et al., Protein Engng. 4 (1991) 719-737 and Siezen et al. Protein Science 6 (1997) 501 -523.
Serine proteases are a subgroup of proteases characterized by having a serine in the active site, which forms a covalent adduct with the substrate. The subtilases may be divided into 6 sub-divisions, i.e. the Subtilisin family, the Thermitase family, the Proteinase K family, the Lantibiotic peptidase family, the Kexin family and the Pyrolysin family.
Examples of subtilases are those derived from Bacillus such as *Bacillus lentus, B. alkalophilus, B. subtilis, B. amyloliquefaciens, Bacillus pumilus* and *Bacillus gibsonii* described in; US7262042 and WO09/021867, and subtilisin lentus, subtilisin Novo, subtilisin Carlsberg, *Bacillus licheniformis,* subtilisin BPN', subtilisin 309, subtilisin 147 and subtilisin 168 described in WO 89/06279 and protease PD138 described in (WO 93/18140). Preferably the subsilisin is derived from Bacillus, preferably *Bacillus lentus, B. alkalophilus, B. subtilis, B. amyloliquefaciens, Bacillus pumilus* and *Bacillus gibsonii* as described in US 6,312,936 B1, US 5,679,630, US 4,760,025, US7,262,042 and WO 09/021867. More preferably the subtilisin is derived from *Bacillus gibsonii* or *Bacillus Lentus.*
Other useful proteases may be those described in WO 92/175177, WO 01/016285, WO 02/026024 and WO 02/016547. Examples of trypsin-like proteases are trypsin (e.g. of porcine or bovine origin) and the Fusarium protease described in WO 89/06270, WO 94/25583 and WO 05/040372, and the chymotrypsin proteases derived from Cellumonas described in WO 05/052161 and WO 05/052146.
Further examples of useful proteases are the variants described in: WO92/19729, WO96/034946, WO98/201 15, WO98/201 16, WO99/01 1768, WO01/44452, WO03/006602, WO04/03186, WO04/041979, WO07/006305, WO1 1/036263, WO1 1/036264, especially the variants with substitutions in one or more of the following positions: 3, 4, 9, 15, 27, 36, 57, 68, 76, 87, 95, 96, 97, 98, 99, 100, 101, 102, 103, 104, 106, 1 18, 120, 123, 128, 129, 130, 160, 167, 170, 194, 195, 199, 205, 206, 217, 218, 222, 224, 232, 235, 236, 245, 248, 252 and 274 using the BPN' numbering. More preferred the subtilase variants may comprise the mutations: S3T, V41, S9R, A15T, K27R, *36D, V68A, N76D, N87S, R, *97E,A98S, S99G,D,A, S99AD, S101 G, M, R S103A, V104I,Y, N, S106A, G1 18V,R, H120D, N, N123S, S128L, P129Q, S130A, G160D, Y167A, R170S, A194P, G195E, V199M, V2051, L217D, N218D, M222S, A232V, K235L, Q236H, Q245R, N252K, T274A (using BPN' numbering).
Most preferably the protease is a subtilisin (EC 3.4.21.62).
Suitable commercially available protease enzymes include those sold under the trade names names Alcalase®, Blaze®; Duralase™, Durazym™, Relase®, Relase® Ultra, Savinase®, Savinase® Ultra, Primase®, Polarzyme®, Kannase®, Liquanase®, Liquanase® Ultra, Ovozyme®, Coronase®, Coronase® Ultra, Neutrase®, Everlase® and Esperase® all could be sold as Ultra® or Evity® (Novozymes A/S).
Those sold under the tradename Maxatase®, Maxacal®, Maxapem®, Purafect®, Purafect Prime®, Preferenz™, Purafect MA®, Purafect Ox®, Purafect OxP®, Puramax®, Properase®, Effectenz™, FN2®, FN3®, FN4®, Excellase®, Opticlean® and Optimase® (from Genencor International Inc./ Danisco/DuPont), Axapem™(Gist-Brocases N.V.).
Those available from Henkel/Kemira, namely BLAP (sequence shown in Figure 29 of US 5,352,604 with the following mutations S99D + SIOI R + S103A+ V1041+ G159S, hereinafter referred to as BLAP), BLAP R (BLAP with S3T + V41+ V199M + V2051+ L217D), BLAP X (BLAP with S3T + V41 + V2051) and BLAP F49 (BLAP with S3T + V41+ A194P + V199M + V2051 + L217D) - all from Henkel/Kemira; and KAP (*Bacillus alkalophilus* subtilisin with mutations A230V + S256G + S259N) from Kao.
The invention may use cutinase, classified in EC 3.1.1.74. The cutinase used according to the invention may be of any origin. Preferably cutinases are of microbial origin, in particular of bacterial, of fungal or of yeast origin.

Further enzymes

It is particularly preferred that the aqueous liquid laundry composition comprises a combination of amylase and protease.

One or more further enzymes may be present in the aqueous liquid laundry detergent composition of the invention. Preferably the level of each enzyme in the laundry detergent composition of the invention is from 0.0001 wt. % to 0.1 wt. % of active protein. Especially contemplated enzymes include cellulases, lipases, peroxidases/oxidases, pectate lyases, and mannanases, or mixtures thereof.

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Sequestrant

It was even further surprising to observe that loss of amylase and protease activity upon exposure to sunlight could be further reduced by including 0.001 to 0.1 wt. % of sequestrant, wherein the common logarithm (i.e. $\log_{10}$) of the $Fe^{3+}$ binding constant of the sequestrant is at least 19.0. Preferably the common logarithm of the $Fe^{3+}$ binding constant is from 20.0 to 45.0, more preferably is from 21.0 to 40.0, even more preferably is from 22.0 to 36.0 and still even more preferably is from 23.0 to 35.0.

More preferred amount of said sequestrant is from 0.002 to 0.05 wt. %, more preferably of from 0.005 to 0.04 wt. % and even more preferably of from 0.01 to 0.03 wt. %. Sequestrants are chemicals which non-covalently bind to metal ions, preferably transition metal ions, to form a complex according to the following general reaction scheme:

$$\mathrm{L} + \mathrm{M} \rightleftharpoons \mathrm{ML} \qquad (1)$$

wherein the sequestrant is denoted as 'L', the metal ion is denoted as 'M' and the resulting sequestrant-metal complex is denoted as 'ML'. The sequestrant strength is indicated by the equilibrium constant 'K' according to the following formula:

$$K = \frac{[ML]}{[M][L]} \qquad (2)$$

where [ML], [M] and [L] are the concentrations of the species in equilibrium in moles per litre. The greater the equilibrium constant K, the stronger is the sequestrant strength of the chelator 'L'.

As used herein the term "$Fe^{3+}$ binding constant" is the equilibrium binding constant K between a sequestrant and $Fe^{3+}$, where K is calculated according to equation (2) and as determined in water (pH 7), at 25 degrees Celsius and an ionic strength of 0.1 mol/L. The table below gives the common logarithm $\log_{10}(K)$ of the equilibrium binding constants of selected sequestrants determined in these conditions. The specific values are taken from the National Institute of Standards and Technology ("NIST"), R.M. Smith, and A.E. Martell, NIST Standard Reference Database 46, NIST Critically Selected Stability Constants of Metal Complexes: Version 8.0, May 2004, U.S. Department of Commerce, Technology Administration, NIST, Standard Reference Data Program, Gaithersburg, MD.

| Sequestrant | $\text{Log}_{10}(K)$ |
|---|---|
| EDTA | 25.1 |
| [S-S]-EDDS | 20.6 |
| DTPA | 28.0 |
| NTA | 24.3 |
| Salicyclic acid | 35.3 |
| MECAMS | 44 |
| 4-LICAMS | 27 |
| 3,4-LiCAMS | 43 |

(continued)

| Sequestrant | $Log_{10}(K)$ |
|---|---|
| 8-hydroxyquinoline | 36.9 |
| Disulfocatechol | 20.4 |
| Desferrioxamine B | 30.6 |
| Acetohydroxamic acid | 28 |
| Citric acid | 11.5 |

DTPA is diethylenetriaminepentaacetic acid. EDDS is ethylenediamine-N,N'-disuccinic acid. NTA is 2,2',2"-nitrilotriacetic acid. MECAMS, 4-LICAMS and 3,4-LICAMS are described by Raymond et. al. in "Inorganic Chemetal-ion sequestrantry in Biology and Medicine", Chapter 18, ACS Symposium Series, Washington, D.C. 1980. Desferrioxamine B is a commercially available iron chelating drug desferal®.

Methods to determine the equilibrium binding constant of sequestrants are described in Orama et. a. "Complexation of [S,S] and mixed stereoisomers of N,N'-ethylenediaminedisuccinic acid (EDDS) with FE(III), Cu(II), Zn(II) and Mn(II) ions in aqueous solution", J. Chem. Soc., Dalton Trans., 2002, 4644-4648.

Preferred sequestrants comprise one or more of catechols, hydroxymates, aminocarboxylates, 4-Pyridinones, aminopolycarboxylates and alkyl- or alkenylsuccinic acid. 4-Pyridinone based sequesterants are discussed in WO2007042140 and WO15028395. Examples of a hydroxymate are acetohydroxamic acid and Desferrioxamine B is a commercially available iron chelating drug, desferal®. Example of a catechol is MECAMS, 4-LICAMS and 3,4-LICAMS are described by Raymond et al. in "Inorganic Chemistry in Biology and Medicine", Chapter 18, ACS Symposium Series, Washington, D.C. (1980).

The sequestrant more preferably comprises one or more of 2,2',2"-nitrilotriacetic acid (NTA), ethylenediaminetetraacetic acid (EDTA), diethylenetriaminepentaacetic acid (DTPA), iminodisuccinic acid (IDS), ethylenediamine-N,N'-disuccinic acid (EDDS), methylglycine-N,N- diacetic acid (MGDA), glutamic acid-N,N-diacetic acid (GLDA), N-(2-hydroxyethyl)iminodiacetic acid (EDG), aspartic acid-N-monoacetic acid (ASMA), aspartic acid-N,N-diacetic acid (ASDA), aspartic acid-N-monopropionic acid (ASMP, N-(sulfomethyl)aspartic acid (SMAS), N-(2-sulfoethyl)-aspartic acid (SEAS), N-(sulfomethylglutamic acid (SMGL), N-(2-sulfoethyl)-glutamic acid (SEGL), N-methyliminodiacetic acid (MID A), serine-N,N-diacetic acid (SEDA), isoserine-N,N-diacetic acid (ISDA), phenylalanine-N,N-diacetic acid (PHDA), anthranilic acid-N,N-diacetic acid (ANDA), sulfanilic acid-N,N-diacetic acid (SLDA) , taurine-N,N-diacetic acid (TUDA) and N'-(2-hydroxyethyl)ethylenediamine-N,N,N'-triacetic acid (HEDTA), diethanolglycine (DEG). Although these sequestrant species are mentioned using their acid form, it is to be understood that their partial or full salt forms are included in this denomination. The acid forms of the sequestrants are preferred.

Best results were achieved with sequestrant comprising aminopolycarboxylate and particularly advantageous are ethylenediaminetetraacetic acid (EDTA) and ethylenediamine-N,N'-disuccinic acid (EDDS).

## Surfactant

The aqueous liquid laundry detergent composition of the invention comprises from 5 to 60 wt. % of a surfactant, most preferably 10 to 30 wt. %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic surfactants may include, in particular, the reaction products of compounds having a hydrophobic group and a reactive hydrogen atom, for example, aliphatic alcohols, acids, amides with alkylene oxides, especially ethylene oxide either alone or with propylene oxide. Specific nonionic surfactants are the condensation products of aliphatic $C_8$ to $C_{18}$ primary or secondary linear or branched alcohols with ethylene oxide, generally 5 to 40 EO, preferably 7EO to 9EO.

Suitable anionic surfactants which may be used are usually water-soluble alkali metal salts of organic sulfates and sulphonates having alkyl radicals containing from about 8 to about 22 carbon atoms, the term alkyl being used to include the alkyl portion of higher acyl radicals. Examples of suitable synthetic anionic surfactants are sodium and potassium alkyl sulfates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulfates, especially those ethers of the higher

alcohols derived from tallow or coconut oil and synthetic alcohols derived from petroleum. The preferred anionic surfactants are sodium $C_{11}$ to $C_{15}$ alkyl benzene sulphonates and sodium $C_{12}$ to $C_{18}$ alkyl sulfates. Highly preferred are anionic alkyl benzene sulfonates, which more advantageously are linear alkyl benzene sulphonates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic and nonionic surfactants, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulfate together with a $C_{12}$ to $C_{15}$ primary alcohol 3 to 7 EO ethoxylate. More preferably the surfactant systems are mixtures of anionic and nonionic surfactants exclusively.

The nonionic surfactant is preferably present in amounts of less than 50 wt. %, most preferably of less than 20 wt. % based on the total weight of the surfactant system. Anionic surfactants can be present for example in amounts in the range from 50 to 100 wt. % based on the total weight of the surfactant system. Thus, a highly advantageous surfactant comprises 50 to 100 wt. % of linear alkyl benzene sulfonates, based on the total weight of surfactants. Beneficially, the weight ratio of anionic: nonionic surfactant is greater than 2 (i.e. more than twice the weight amount of anionic compared to the amount of nonionic).

pH

Preferably the aqueous liquid laundry detergent has a pH from 5 to 9, preferably from 6 to 8, as measured at 293K.

Fluorescent Agent

The aqueous liquid laundry detergent composition of the invention preferably comprises a fluorescent agent (also known as optical brightener). Fluorescent agents are well-known, and many such fluorescent agents are available commercially. Usually, these fluorescent agents are supplied and used in the form of their alkali metal salts, for example, the sodium salts. The total amount of the fluorescent agent or agents used in the laundry detergent composition of the invention is generally from 0.005 to 2 wt. %, more preferably 0.01 to 0.1 wt. %. Preferred classes of fluorescer are: Di-styryl biphenyl compounds, e.g. Tinopal (Trade Mark) CBS-X, Di-amine stilbene disulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous liquid laundry detergent composition according to the invention comprises a fluorescer. When the aqueous liquid laundry detergent composition of the invention is used to make a diluted wash liquor in a domestic method of treating a textile, the fluorescer is preferably present in the range from 0.0001 g/l to 0.1 g/l, preferably 0.001 to 0.02 g/l in the diluted wash liquor.

Perfume

Preferably the aqueous liquid laundry detergent composition comprises a perfume. The perfume is preferably in the range from 0.001 to 3 wt. %, most preferably 0.1 to 1 wt. %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a laundry formulation. In the laundry detergent compositions of the present invention it is envisaged that there will be four or more, preferably five or more, more preferably six or more or even seven or more different perfume components.

In perfume mixtures preferably 15 to 25 wt. % are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol. Perfume and top note are advantageously used to cue the whiteness benefit provided by the laundry detergent composition of the invention. It is preferred that the aqueous liquid laundry detergent composition of the invention does not contain a peroxygen bleach, e.g., sodium percarbonate, sodium perborate, and peracid.

Polymers

The aqueous liquid laundry detergent composition of the invention may comprise one or more further polymers. Examples are carboxymethylcellulose, poly (ethylene glycol), poly(vinyl alcohol), polycarboxylates such as polyacrylates,

maleic/acrylic acid copolymers and lauryl methacrylate/acrylic acid copolymers. Polymers present to prevent dye deposition, for example poly(vinylpyrrolidone), poly(vinylpyridine-N-oxide), and poly(vinylimidazole), are preferably absent from the formulation.

Other ingredients

The aqueous liquid laundry composition according to the invention preferably does not comprise tocopherols in an amount of from 0.001 to 2 wt. % and more preferably does not comprise 0.001 to 2 wt. % of anti-oxidant as defined in claim 1 (f) of US2005/0130859 A1. It was found that such anti-oxidants are not necessary to include in the aqueous liquid laundry detergent composition of the invention, while still preventing a reduction of the amylase and/or protease activity upon exposure to sunlight. Omitting these anti-oxidants from the composition reduces the ingredient listing and simplifies manufacturing.

For the same reason the aqueous liquid laundry composition according to the invention preferably also does not comprise pearlescent agent as disclosed in US2008/0234169. These pearlescent agents are crystalline or glassy solids capable of reflecting and refracting light to produce a pearlescent effect. Such pearlescent agents are not needed and since their inclusion complicates manufacturing.

Even though not preferred, such tocopherols and pearlescent agents may however be present in the aqueous liquid laundry composition according to the invention.

From of the transparent plastic container

The transparent plastic container of the invention has a preferred internal volume of from 0.2 to 5 L, more preferably of from 0.5 to 2 L. The transparent plastic container is not in the form of a water-soluble film-wrapped unit dose product.

Advantageously the container has a pouring neck with a resealable screw top where the maximum dimension of the pouring neck of the container is at least 3 times smaller than the maximum dimension of the container. Preferably the container has a minimum width at it base, of 3 cm, more preferably 4 cm. The width is measured parallel to the flat surface on which the container stands in an upright position.

On initial sale the container should be filled to greater than 95% of the container capacity by weight. Surprisingly this further reduces the reduction of amylase and/or protease activity upon exposure to sunlight.

The plastic of the container may be coloured although it should remain at least in part transparent. This can be easily achieved by reducing the amount of colorant in the plastic as needed and/or by modifying the container wall thickness. Advantageously the plastic of the container contains essentially no added colorant and has no perceivable colour to the untrained human eye.

The container-plastic preferably comprises polyethylene terephthalate (PET), high density polyethylene (HDPE) or a combination thereof and more preferably PET. It is advantageous that the plastic of the container comprises at least 80 wt. %, more preferably at least 95 wt. % of PET and/or HDPE, preferably PET.

Preferably the transparent plastic of the container comprises from 50 to 100 wt. %, preferably from 80 to 100 wt. % and more preferably from 90 to 100 wt. % of recycled plastic, based on the total weight of the plastic of the container. The wt. % of recycled plastic can be determined by measuring the tensile strength of the plastic. Alternatively, recycled plastics can be distinguished from virgin plastic in various ways as recycled plastic often has polymers of reduced molecular weight and are characterized by the presence of impurities (see Rahimi et. al. "Chemical recycling of waste plastics for new materials production", Nature Reviews Chemistry", vol. 1, Art. No. 0046, 2017).

Advantageously the plastic of the container contains from 0.01 to 6 wt. %, more preferably from 0.1 to 5 wt. % and even more preferably from 1 to 4.5 wt. % of a UV absorber, based on the total weight of the container. The UV absorber are present as additive in the plastic. Advantageous UV absorbers are one or more of benzophenones, salicyclates, benzotriazoles, hindered amines and alkoxy (e.g. methoxy) cinnamates). More preferred UV absorbers are benzotriazole-based absorbers. Benzotriazole-based UV absorbers are described in Cantwell et. al. "Benzotriazoles: History, Environmental Distribution, and Potential Ecological Effects", Chapter 16, Comprehensive Analytical Chemistry, Vol. 67, 2015, pages 513-545; and in Pospisil et. al. "Oxidation Inhibition in Organic Materials", CRC Press, 1990. Benzotriazole-based UV absorbers are commercially available from e.g. BASF and Clariant. It was surprisingly found that even when the container plastic contains high levels of UV absorbers, the amylase and/or protease activity of the liquid laundry detergent composition can still be reduced upon exposure to sunlight. Said reduction of amylase and/or protease activity is reduced by use of an aqueous liquid laundry detergent composition according to the invention.

The transparent plastic container of the invention is most advantageously in the shape of a bottle.

Process

The process according to the invention relates to the manufacture of a transparent plastic container comprising an aqueous liquid laundry detergent composition according to the first aspect of the invention, wherein the process comprises the steps of:

a) providing a plastic transparent container, wherein the plastic preferably comprises from 50 to 100 wt. % recycled plastic, based on the total weight of the plastic;
b) providing an aqueous liquid laundry detergent composition according to the first aspect of the invention;
c) filling the container provided at step a) with the aqueous liquid laundry detergent composition provided at step b) to provide the transparent plastic container comprising an aqueous liquid laundry detergent composition.

It will be appreciated that steps a) and b) can be done in any order.

More preferred amounts of recycled plastic comprised by the plastic transparent container are from 80 to 100 wt. % and even more preferably from 90 to 100 wt. %, based on the total weight of the plastic of the container; any remaining plastic being virgin plastic. The amount of recycled plastic comprised by the transparent plastic container provided at step a) can be determined by determining the wt.% of recycled plastic feed material used, based on the total plastic feed material from which the container is made. Plastic containers comprising (or made essentially from) recycled plastic are nowadays commercially available and the methods of their manufacture are well known in the art. Information of recycled plastics as well as their use to make detergent bottles is discussed in the literature, such as in Methods of Recycling, Properties and Applications of Recycled Thermoplastic Polymers. M.E. Grigore, Recycling 2017, 2, 24. Generally, to convert reclaimed post-use plastic into a useable feedstock to manufacture new plastic products the plastic is washed, dried and suitably pelletized. The pelletized recycled plastic can then be optionally mixed with virgin pelletized plastic and subjected to processes to shape it into new plastic products.

Processes to convert (pelletized) plastic feed material into final formed plastic products (e.g. detergent bottles) are known in the art since decades. A general description thereof can be found e.g. in Hans-Georg Elias "An introduction to plastics", 1993. Such techniques include thermoforming, blow molding, injection-molding or injection stretch blow molding. The UV absorber, if present, is preferably added to the (pelletized) plastic feed material, used to make which the container is made, while it is molten and mixed therewith prior to forming the container.

The provision of the aqueous liquid laundry detergent composition at step b) can also be done using conventional methods know in the field. Fundamentally the methods comprise the step of mixing of all ingredients of the composition to provide the aqueous liquid laundry composition. It was surprisingly found that the aqueous liquid laundry detergent could be manufactured with water containing 0.1 to 10 ppm transition metal ions, without negatively affecting the colour stability of the aqueous laundry detergent composition. Preferred transition metals are iron and copper. It is indeed advantageous to tolerate such levels in the final composition of the invention as this reduces the complexity of water-quality monitoring systems and/or water purification systems, simplifying the processing.

Preferably the transparent plastic container of the invention comprising the aqueous liquid laundry detergent composition of the invention is obtainable by the process of the invention.

Unless otherwise indicated, preferred aspects in the context of one aspect of the invention (e.g. the transparent plastic container comprising an aqueous liquid laundry detergent composition) are also applicable as preferred aspects in the context of one of the other aspects, (e.g. the process to manufacture the transparent plastic container comprising an aqueous liquid laundry detergent composition) *mutatis mutandis.*

The invention is now illustrated by the following non-limiting examples.

## Examples

Measuring amylase activity

The amylase activity was measured based on the amylolytic action of $\alpha$-amylases on 4,6-ethylidene-p-nitrophenyl-$\alpha$-D-maltoheptaoside (ethylidene-$G_7$PNP). The ethylidene-$G_7$PNP reacts with the $\alpha$-amylase to give $G_2$PNP, $G_3$PNP and $G_4$PNP. The $G_2$PNP, $G_3$PNP and GaPNP react with $\alpha$-glucosidase to glucose and the yellow p-nitrophenol (PNP). The increase in absorbance, due to PNP formation, is proportional to the activity of the $\alpha$-amylase in the sample. The reaction is followed in situ and the change in absorbance at 405nm per time unit is calculated. The amylolytic activity is automatically calculated by referring to a calibration curve of a corresponding reference standard.

Measuring protease activity

The protease level was measured based on the proteolytic action on a tetrapeptide (Succinyl-Ala-Ala-Pro-Phe-p-Nitroanilide), yielding the yellow p-nitroaniline. The reaction is followed in situ and the change in absorbance at 405nm per time unit is calculated. The increase in absorbance, due to p-nitroaniline formation, is proportional to the activity of the protease in the sample. The reaction is followed in situ and the change in absorbance at 405nm per time unit is calculated. The proteolitic activity is automatically calculated by referring to a calibration curve of a corresponding reference standard.

**Experiment 1**

Product manufacture

Transparent 500ml PET (polyethylene terephthalate) colorless plastic bottles were made from 100% recycled PET plastic (Clariant), wherein the bottles did not contain UV absorber. The bottles were filled essentially up to the brim with an aqueous laundry detergent according the formulation as set out in Table 1 to provide products according to the invention (Example 1) and products not according to the invention (Comparative A).

Table 1: aqueous laundry detergent formulation. Amounts are given in wt. %, unless otherwise indicated.

| Ingredient | Ex. 1 | Comp. A |
|---|---|---|
| 1Anionic surfactant | 13.5 | 13.5 |
| 2Nonionic surfactant | 1.5 | 1.5 |
| Triethanol amine | 1.5 | 1.5 |
| Sodium chloride | 2.0 | 2.0 |
| Minors: enzymes, Perfume, fluorescer and preservative | 0.8 | 0.8 |
| Citric acid | 0.5 | 0.5 |
| NaOH (to pH 8) | 0.8 | 0.8 |
| 3amylase | + | + |
| 4Acid Blue 3 | - | + |
| 4Acid Green 25 | + | - |
| **water** | **To balance** | **To balance** |

1Anionic surfactant: Linear alkyl benzene sulfonate and Sodium lauryl ether sulfate with a mole average of 3 ethoxylate in a ratio of 6:7.5.
2Nonionic surfactant: Alcohol ethoxylate based on a saturated linear C12-C15 alcohol with a mole average of 7 ethoxylates.
3amylase: Amylase (Amplify Prime 100L) ex Novozymes ® was added to the formulation at a level of 0.0026 wt. % active protein.
4 Acid Blue 3 is a triphenyl methane dye and was added in an amount of 0.0004 wt. %. Acid Green 25 is a a 1,4-diaminoanthraquinones with external sulfonic acid groups of the following structure:

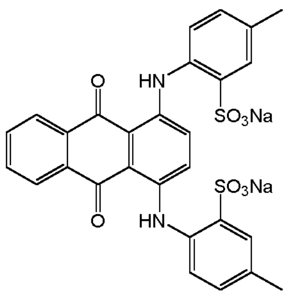

The Acid Green 25 was added to the composition in an amount to match the colour intensity of the compositions comprising Acid Blue 3.

Exposure of the bottles with liquid detergent to sunlight conditions

The bottles were placed in an Atlas xenon rotating rack Weather-Ometer set to mimic outside Florida sunlight (550 $W/m^2$ 300 to 800nm) for 48 hours and then further irradiated to a total of 72 hours. After irradiation, the residual amylase activity of the aqueous liquid laundry detergent was measured. This measured level of amylase activity was compared to the amylase activity of the detergent of bottles which had not been irradiated (i.e. stored in a dark cabinet; activity set to 100 %). The residual amylase activity (% of remaining amylase activity compared to control) is shown in the Table 2 below.

Table 2: Results of amylase activity of the liquid detergent in the bottle

| | **Irradiation Time** | |
|---|---|---|
| | **48 hours** | **72 hours** |
| Example 1 | 100% | 100% |
| Comparative A | 93% | 78% |

The experiments as set out above have mimicked exposure of liquid laundry filled detergent containers, made from recycled transparent plastic to sunlight exposure. The results show that use of an aqueous liquid laundry formulation according to the invention show results in less loss of amylase activity.

**Experiment 2**

Experiment 1 was repeated with the difference that the Transparent 500ml PET (polyethylene terephthalate) plastic bottles contained 4 wt. % of benzotriazole-based UV absorber. The bottles were purchased from Clariant (UV masterbatch).

The results are shown in Table 3, where Example 2 is based on the same aqueous liquid laundry composition as that of Example 1; and where Comparative B is based on the same aqueous liquid laundry composition as that of Comparative A.

Table 3: Results of amylase activity of the liquid detergent in the bottle

| | **Irradiation Time** | |
|---|---|---|
| | **48 hours** | **72 hours** |
| Example 2 | 100% | 100% |
| Comparative B | 89% | 84% |

The results of Example 2 shows the benefits afforded by the product of the invention even when the plastic transparent container is provided with added sun protective agent.

**Experiment 3**

Product manufacture

Transparent 500ml PET (polyethylene terephthalate) colorless plastic bottles were made from 100% recycled PET plastic (Clariant), wherein the bottles did not contain UV absorber. The bottles were filled essentially up to the brim with an aqueous laundry detergent according the formulation as set out in Table 4 to provide products according to the invention (Example 3) and products not according to the invention (Comparative C).

Table 4: aqueous laundry detergent formulation. Amounts are given in wt. %, unless otherwise indicated.

| **Ingredient** | **Ex. 3** | **Comp. C** |
|---|---|---|
| [1]Anionic surfactant | 13.5 | 13.5 |
| [2]Nonionic surfactant | 1.5 | 1.5 |
| Triethanol amine | 1.5 | 1.5 |

(continued)

| Ingredient | Ex. 3 | Comp. C |
|---|---|---|
| Sodium chloride | 2.0 | 2.0 |
| Minors: enzymes, Perfume, fluorescer and preservative | 0.8 | 0.8 |
| Citric acid | 0.5 | 0.5 |
| NaOH (to pH 8) | 0.8 | 0.8 |
| [3]protease | + | + |
| [4]Acid Blue 3 | - | + |
| [4]Acid Green 25 | + | - |
| **water** | **To balance** | **To balance** |

[1]Anionic surfactant: Linear alkyl benzene sulfonate and Sodium lauryl ether sulfate with a mole average of 3 ethoxylate in a ratio of 6:7.5.
[2]Nonionic surfactant: Alcohol ethoxylate based on a saturated linear C12-C15 alcohol with a mole average of 7 ethoxylates.
[3]protease: Subtilisin ex Novozymes ® was added to the formulation at a level of 0.017 wt. % active protein.

Acid Blue 3 is a triphenyl methane dye and was added in an amount of 0.0004 wt. %. Acid Green 25 is a a 1,4-diaminoanthraquinones with external sulfonic acid groups of the following structure:

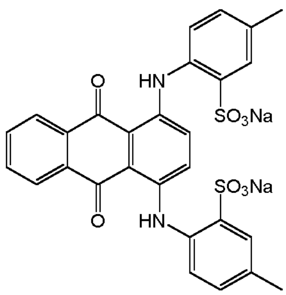

The Acid Green 25 was added to the composition in an amount to match the colour intensity of the compositions comprising Acid Blue 3.

Exposure of the bottles with liquid detergent to sunlight conditions

The bottles were placed in an Atlas xenon rotating rack Weather-Ometer set to mimic outside Florida sunlight (550 W/$m^2$ 300 to 800nm) for 48 hours and then further irradiated to a total of 72 hours. After irradiation, the residual protease activity of the aqueous liquid laundry detergent was measured. This measured level of protease activity was compared to the protease activity of the detergent of bottles which had not been irradiated (i.e. stored in a dark cabinet; activity set to 100 %). The residual protease activity (% of remaining protease activity compared to control) is shown in the Table 5 below.

Table 5: Results of protease activity of the liquid detergent in the bottle

| | **Irradiation Time** | |
|---|---|---|
| | **48 hours** | **72 hours** |
| Example 3 | 100% | 100% |
| Comparative C | 92% | 91% |

The experiments as set out above have mimicked exposure of liquid laundry filled detergent containers, made

from recycled transparent plastic to sunlight exposure. The results show that use of an aqueous liquid laundry formulation according to the invention show results in less loss of protease activity.

**Experiment 4**

Experiment 3 was repeated with the difference that the Transparent 500ml PET (polyethylene terephthalate) plastic bottles contained 4 wt. % of benzotriazole-based UV absorber. The bottles were purchased from Clariant (UV masterbatch). The results are shown in Table 6, where Example 4 is based on the same aqueous liquid laundry composition as that of Example 3; and where Comparative D is based on the same aqueous liquid laundry composition as that of Comparative C.

Table 6: Results of protease activity of the liquid detergent in the bottle

| | **Irradiation Time** | |
|---|---|---|
| | **48 hours** | **72 hours** |
| Example 4 | 100% | 100% |
| Comparative D | 92% | 89% |

The results of Example 4 shows the benefits afforded by the product of the invention even when the plastic transparent container is provided with added sun protective agent.

## Claims

**1.** A transparent plastic container comprising an aqueous liquid laundry detergent composition wherein the liquid detergent composition comprises:

- from 5 to 60 wt. % of surfactant; and
- from of 0.0005 to 0.01 wt.% of an amylase or from 0.0005 to 0.01 wt.% of a protease or a combination thereof; and
- from 0.00005 to 0.02 wt. % of a dye comprising an anthraquinone chromophore which contains an amine group or an acid amide group in the 1-position of the anthraquinone ring; and

wherein the container has an internal volume of from 0.1 to 10 L.

**2.** A transparent plastic container comprising an aqueous liquid laundry detergent composition according to claim 1, wherein the dye provides a violet, blue or green colour to the aqueous liquid detergent composition.

**3.** A transparent plastic container comprising an aqueous liquid laundry detergent composition according to claim 1 or claim 2, wherein the amount of the dye is from 0.0001 to 0.01 wt. %, preferably from 0.0001 to 0.005 wt. %.

**4.** A transparent plastic container comprising an aqueous liquid laundry detergent composition according to anyone of the preceding claims, wherein the dye comprises one or more of Solvent violet 13, Disperse Violet 1, Disperse Violet 4, Disperse Violet 6, Disperse Violet 8, Disperse Violet 17, Disperse Violet 23, Disperse Violet 26, Disperse Violet 28, Disperse violet 28, Disperse violet 57, Disperse violet 62, Disperse Blue 1, Disperse Blue 3, Disperse Blue 5, Disperse Blue 6, , Disperse Blue 7, Disperse Blue 8, Disperse Blue 9, Disperse Blue 14, Disperse Blue 19, Disperse Blue 22, Disperse Blue 23, Disperse Blue 24, Disperse Blue 26, Disperse Blue 27, Disperse Blue 28, Disperse Blue34, Disperse Blue 40, Disperse Blue 56, Disperse Blue 72, , Disperse Blue 73, Disperse Blue 77, Disperse Blue 81, Disperse Blue 83, Disperse Blue 87, Disperse Blue 104, Disperse Blue 109, Disperse Blue 118, Disperse Blue 127, Disperse Blue 134, Disperse Blue 377, Acid Violet 41, Acid violet 42, Acid violet 43, Acid violet 48, Acid violet 51 Acid Green 25, Acid Blue 23, Acid blue 25, Acid Blue 27, Acid blue 40, Acid Blue 43, Acid Blue 47, Acid Blue 49, Acid Blue 51, Acid Blue 53, Acid Blue 55, Acid Blue 56, Acid Blue 62, Acid Blue 68, Acid Blue 69, Acid Blue 78, Acid Blue 80, Acid Blue 81:1, Acid Blue, Acid Blue 96, Acid Blue 124, Acid Blue 128, Acid Blue 129, Acid Blue 175, Acid Blue 215, Acid Blue 230, Acid Blue 277, Acid Green 25 and Acid Green 41; and preferably one or more of Acid green 25, Acid blue 80, solvent Violet 13, Disperse Violet 28 and Acid Violet 43.

**5.** A transparent plastic container comprising an aqueous liquid laundry detergent composition according to anyone

of the preceding claims, wherein the amylase comprises one or more amylases according to:

a) amylases having SEQ ID NO: 2 as described WO 95/10603 or variants having 90% sequence identity to SEQ ID NO: 2.
b) hybrid alpha-amylase comprising residues 1-33 of the alpha-amylase derived from B. *amyloliquefaciens* shown in SEQ ID NO: 6 of WO 2006/066594, residues 36-483 of the B. *licheniformis* alpha-amylase shown in SEQ ID NO: 4 of WO 2006/066594 or variants having 90% sequence identity thereof.
c) amylases having SEQ ID NO: 6 in WO 99/019467 or variants thereof having 90% sequence identity to SEQ ID NO: 6.
d) amylases having SEQ ID NO: 2 of WO 08/153815 or SEQ ID NO: 10 of WO 01/66712 or variants thereof having 90% sequence identity to said sequences.
e) amylases having SEQ ID NO: 2 of WO 09/061380 or variants having 90% sequence identity to SEQ ID NO: 2 thereof.
f) alpha-amylase having SEQ ID NO: 12 in WO01/66712 or a variant having at least 90% sequence identity to SEQ ID NO: 12.

**6.** A transparent plastic container comprising an aqueous liquid laundry detergent composition according to anyone of the preceding claims, wherein the protease is a serine protease and preferably a subtilase type serine protease.

**7.** A transparent plastic container comprising an aqueous liquid laundry detergent composition according to anyone of the preceding claims, further comprising from 0.001 to 0.1 wt. % of sequestrant, wherein the common logarithm, i.e., $\log_{10}$, of the $Fe^{3+}$ binding constant of the sequestrant is at least 19.0, preferably in an amount of from 0.002 to 0.05 wt. %, more preferably of from 0.005 to 0.04 wt. %, even more preferably of from 0.01 to 0.03 wt.%.

**8.** A transparent plastic container comprising an aqueous liquid laundry detergent composition according to claim 7, wherein the common logarithm of the $Fe^{3+}$ binding constant is from 20.0 to 45.0, preferably from 21.0 to 40.0, more preferably is from 22.0 to 36.0 and even more preferably is from 23.0 to 35.0.

**9.** A transparent plastic container comprising an aqueous liquid laundry detergent composition according to anyone of the preceding claims, wherein the plastic of the container comprises from 50 to 100 wt. %, preferably from 80 to 100 wt. % and more preferably from 90 to 100 wt. % of recycled plastic, based on the total weight of the plastic of the container.

**10.** A transparent plastic container comprising an aqueous liquid laundry detergent composition according to anyone of the preceding claims, wherein the plastic of the container comprises from 0.01 to 6 wt. %, preferably from 0.1 to 5 wt. % and more preferably from 1 to 4.5 wt. % of UV absorber, based on the total weight of the container.

**11.** A transparent plastic container comprising an aqueous liquid laundry detergent composition according to anyone of the preceding claims, wherein the aqueous liquid laundry detergent has a pH from 5 to 9, preferably from 6 to 8, as measured at 293K.

**12.** A transparent plastic container comprising an aqueous liquid laundry detergent composition according to anyone of the preceding claims, wherein the plastic of the container comprises polyethylene terephthalate (PET), high density polyethylene (HDPE) or a combination thereof and preferably polyethylene terephthalate (PET).

**13.** A transparent plastic container comprising an aqueous liquid laundry detergent composition according to anyone of the preceding claims, wherein the container is a bottle having an internal volume of from 0.2 to 5 L and preferably of from 0.5 to 2 L.

**14.** A transparent plastic container comprising an aqueous liquid laundry detergent composition according to anyone of the preceding claims, wherein at least 30 %, preferably at least 50%, more preferably at least 70% and even more preferably at least 85 % of the outer container surface is transparent.

**15.** A process for the manufacture of a transparent plastic container comprising an aqueous liquid laundry detergent composition according to anyone of the preceding claims, wherein the process comprises the steps of:

a) providing a plastic transparent container, having an internal volume of from 0.1 to 10 L, wherein the plastic preferably comprises from 50 to 100 wt. % of recycled plastic, based on the total weight of the plastic;

b) providing an aqueous liquid laundry detergent composition according to anyone of the preceding claims;
c) filling the container provided at step a) with the aqueous liquid laundry detergent composition provided at step b), to provide the transparent plastic container comprising an aqueous liquid laundry detergent composition.

**Patentansprüche**

1. Transparenter Kunststoffbehälter, umfassend eine wässrige flüssige Waschmittelzusammensetzung, wobei die flüssige Waschmittelzusammensetzung umfasst:

   • 5 bis 60 Gew.-% Tensid; und
   • 0,0005 bis 0,01 Gew.-% einer Amylase oder 0,0005 bis 0,01 Gew.-% einer Protease oder einer Kombination davon; und
   • 0,00005 bis 0,02 Gew.-% eines Farbstoffs, umfassend ein Anthrachinon-Chromophor, das eine Aminogruppe oder eine Säureamidgruppe in der 1-Position des Anthrachinonrings enthält; und

   wobei der Behälter ein Innenvolumen von 0,1 bis 10 l aufweist.

2. Transparenter Kunststoffbehälter, umfassend eine wässrige flüssige Waschmittelzusammensetzung nach Anspruch 1, wobei der Farbstoff der wässrigen flüssigen Waschmittelzusammensetzung eine violette, blaue oder grüne Färbung verleiht.

3. Transparenter Kunststoffbehälter, umfassend eine wässrige flüssige Waschmittelzusammensetzung nach Anspruch 1 oder Anspruch 2, wobei die Menge des Farbstoffs 0,0001 bis 0,01 Gew.-%, vorzugsweise 0,0001 bis 0,005 Gew.-%, beträgt.

4. Transparenter Kunststoffbehälter, umfassend eine wässrige flüssige Waschmittelzusammensetzung nach irgendeinem der vorhergehenden Ansprüche, wobei der Farbstoff umfasst einen oder mehrere von Solvent Violet 13, Disperse Violet 1, Disperse Violet 4, Disperse Violet 6, Disperse Violet 8, Disperse Violet 17, Disperse Violet 23, Disperse Violet 26, Disperse Violet 28, Disperse Violet 28. Disperse Violet 57, Disperse Violet 62, Disperse Blue 1, Disperse Blue 3, Disperse Blue 5, Disperse Blue 6, Disperse Blue 7, Disperse Blue 8, Disperse Blue 9, Disperse Blue 14, Disperse Blue 19, Disperse Blue 22, Disperse Blue 23, Disperse Blue 24, Disperse Blue 26, Disperse Blue 27, Disperse Blue 28, Disperse Blue 34, Disperse Blue 40, Disperse Blue 56, Disperse Blue 72, Disperse Blue 73, Disperse Blue 77, Disperse Blue 81, Disperse Blue 83, Disperse Blue 87, Disperse Blue 104, Disperse Blue 109, Disperse Blue 118, Disperse Blue 127, Disperse Blue 134, Disperse Blue 377, Acid Violet 41, Acid Violet 42, Acid Violet 43, Acid Violet 48, Acid Violet 51, Acid Green 25, Acid Blue 23, Acid Blue 25, Acid Blue 27, Acid Blue 40, Acid Blue 43, Acid Blue 47, Acid Blue 49, Acid Blue 51, Acid Blue 53, Acid Blue 55, Acid Blue 56, Acid Blue 62, Acid Blue 68, Acid Blue 69, Acid Blue 78, Acid Blue 80, Acid Blue 81:1, Acid Blue, Acid Blue 96, Acid Blue 124, Acid Blue 128, Acid Blue 129, Acid Blue 175, Acid Blue 215, Acid Blue 230, Acid Blue 277, Acid Green 24 und Acid Green 41 und vorzugsweise einen oder mehrere von Acid Green 25, Acid Blue 80, Solvent Violet 13, Disperse Violet 28 und Acid Violet 43.

5. Transparenter Kunststoffbehälter, umfassend eine wässrige flüssige Waschmittelzusammensetzung nach irgendeinem der vorhergehenden Ansprüche, wobei die Amylase umfasst eine oder mehrere Amylasen gemäß:

   a) Amylasen mit SEQ ID NO:2, wie in WO 95/10603 beschrieben, oder Varianten mit einer 90%-igen Sequenzidentität zu SEQ ID NO:2;
   b) Hybrid-alpha-Amylase, umfassend Reste 1-33 der alpha-Amylase, abgeleitet von B. amyloliquefaciens, gezeigt in SEQ ID NO:6 der WO 2006/066594, Reste 36-483 der B. licheniformis alpha-Amylase, gezeigt in SEQ ID NO:4 der WO 2006/066594, oder Varianten mit 90% Sequenzidentität davon;
   c) Amylasen mit SEQ ID NO:6 der WO 99/019467 oder Varianten davon mit 90% Sequenzidentität zu SEQ ID NO:6,
   d) Amylasen mit SEQ ID NO:2 der WO 08/153815 oder SEQ ID NO: 10 der WO 01/66712 oder Varianten davon mit 90% Sequenzidentität zu den genannten Sequenzen;
   e) Amylasen mit SEQ ID NO:2 der WO 09/061380 oder Varianten mit 90% Sequenzidentität zu SEQ ID NO:2 davon;
   f) alpha-Amylase mit SEQ ID NO: 12 in WO 01/66712 oder einer Variante mit mindestens 90% Sequenzidentität zu SEQ ID NO: 12.

6. Transparenter Kunststoffbehälter, umfassend eine wässrige flüssige Waschmittelzusammensetzung nach irgendeinem der vorhergehenden Ansprüche, wobei die Protease eine Serinprotease und vorzugsweise eine Serinprotease vom Subtilasetyp ist.

7. Transparenter Kunststoffbehälter, umfassend eine wässrige flüssige Waschmittelzusammensetzung nach irgendeinem der vorhergehenden Ansprüche, ferner umfassend 0,001 bis 0,1 Gew.-% Komplexbildner, wobei der gewöhnliche Logarithmus, d.h., $log_{10}$, der $Fe^{3+}$-Bindungskonstanten des Komplexbildners mindestens 19,0, vorzugsweise in einer Menge von 0,002 bis 0,05 Gew.-%, bevorzugter von 0,005 bis 0,04 Gew.-%, noch bevorzugter von 0,01 bis 0,03 Gew.-%, beträgt.

8. Transparenter Kunststoffbehälter, umfassend eine wässrige flüssige Waschmittelzusammensetzung nach Anspruch 7, wobei der gewöhnliche Logarithmus der $Fe^{3+}$-Bindungskonstante 20,0 bis 45,0, vorzugsweise 21,0 bis 40,0, bevorzugter 22,0 bis 36,0 und noch bevorzugter 23,0 bis 35,0 beträgt.

9. Transparenter Kunststoffbehälter, umfassend eine wässrige flüssige Waschmittelzusammensetzung nach irgendeinem der vorhergehenden Ansprüche, wobei der Kunststoff des Behälters 50 bis 100 Gew.-%, vorzugsweise 80 bis 100 Gew.-% und bevorzugter 90 bis 100 Gew.-% recycelten Kunststoff, bezogen auf das Gesamtgewicht des Kunststoffs des Behälters, umfasst.

10. Transparenter Kunststoffbehälter, umfassend eine wässrige flüssige Waschmittelzusammensetzung nach irgendeinem der vorhergehenden Ansprüche, wobei der Kunststoff des Behälters 0,01 bis 6 Gew.-%, vorzugsweise 0,1 bis 5 Gew.-% und bevorzugter 1 bis 4,5 Gew.-% UV-Absorber, bezogen auf das Gesamtgewicht des Behälters, umfasst.

11. Transparenter Kunststoffbehälter, umfassend eine wässrige flüssige Waschmittelzusammensetzung nach irgendeinem der vorhergehenden Ansprüche, wobei das wässrige flüssige Waschmittel einen pH-Wert von 5 bis 9, vorzugsweise von 6 bis 8, gemessen bei 293 K, aufweist.

12. Transparenter Kunststoffbehälter, umfassend eine wässrige flüssige Waschmittelzusammensetzung nach irgendeinem der vorhergehenden Ansprüche, wobei der Kunststoff des Behälters Polyethylenterephthalat (PET), Polyethylen hoher Dichte (HDPE) oder eine Kombination davon und vorzugsweise Polyethylenterephthalat (PET) umfasst.

13. Transparenter Kunststoffbehälter, umfassend eine wässrige flüssige Waschmittelzusammensetzung nach irgendeinem der vorhergehenden Ansprüche, wobei der Behälter eine Flasche mit einem Innenvolumen von 0,2 bis 5 l und vorzugsweise von 0,5 bis 2 l ist.

14. Transparenter Kunststoffbehälter, umfassend eine wässrige flüssige Waschmittelzusammensetzung nach irgendeinem der vorhergehenden Ansprüche, wobei mindestens 30%, vorzugsweise mindestens 50%, bevorzugter mindestens 70% und noch bevorzugter mindestens 85% der äußeren Behälteroberfläche transparent sind.

15. Verfahren zur Herstellung eines transparenten Kunststoffbehälters, umfassend eine wässrige flüssige Waschmittelzusammensetzung nach irgendeinem der vorhergehenden Ansprüche, wobei das Verfahren die Schritte umfasst:

a) Bereitstellen eines transparenten Kunststoffbehälters mit einem Innenvolumen von 0,1 bis 10 l, wobei der Kunststoff vorzugsweise 50 bis 100 Gew.-% recycelten Kunststoff, bezogen auf das Gesamtgewicht des Kunststoffs, umfasst;
b) Bereitstellen einer wässrigen flüssigen Waschmittelzusammensetzung nach irgendeinem der vorhergehenden Ansprüche;
c) Füllen des Behälters, bereitgestellt im Schritt a), mit der wässrigen flüssigen Waschmittelzusammensetzung, bereitgestellt im Schritt b), um den transparenten Kunststoffbehälter, umfassend eine wässrige flüssige Waschmittelzusammensetzung, bereitzustellen.

**Revendications**

1. Récipient en plastique transparent comprenant une composition de détergent de lessive liquide aqueuse dans lequel la composition de détergent liquide comprend :

• de 5 à 60 % en masse de tensioactif ; et

- de 0,0005 à 0,01 % en masse d'une amylase et de 0,0005 à 0,01 % en masse d'une protéase ou d'une combinaison de celles-ci ; et
- de 0,00005 à 0,02 % en masse d'un colorant comprenant un chromophore d'anthraquinone qui contient un groupe amine ou un groupe amide d'acide dans la position 1 du noyau anthraquinone ; et

dans lequel le récipient présente un volume interne de 0,1 à 10 L.

**2.** Récipient en plastique transparent comprenant une composition de détergent de lessive liquide aqueuse selon la revendication 1, dans lequel le colorant fournit une couleur violette, bleue ou verte à la composition de détergent liquide aqueuse.

**3.** Récipient en plastique transparent comprenant une composition de détergent de lessive liquide aqueuse selon la revendication 1 ou revendication 2, dans lequel la quantité du colorant est de 0,0001 à 0,01 % en masse, de préférence de 0,0001 à 0,005 % en masse.

**4.** Récipient en plastique transparent comprenant une composition de détergent de lessive liquide aqueuse selon l'une quelconque des revendications précédentes, dans lequel le colorant comprend un ou plusieurs de Solvent violet 13, Disperse Violet 1, Disperse Violet 4, Disperse Violet 6, Disperse Violet 8, Disperse Violet 17, Disperse Violet 23, Disperse Violet 26, Disperse Violet 28, Disperse violet 28, Disperse violet 57, Disperse violet 62, Disperse Blue 1, Disperse Blue 3, Disperse Blue 5, Disperse Blue 6, Disperse Blue 7, Disperse Blue 8, Disperse Blue 9, Disperse Blue 14, Disperse Blue 19, Disperse Blue 22, Disperse Blue 23, Disperse Blue 24, Disperse Blue 26, Disperse Blue 27, Disperse Blue 28, Disperse Blue 34, Disperse Blue 40, Disperse Blue 56, Disperse Blue 72, Disperse Blue 73, Disperse Blue 77, Disperse Blue 81, Disperse Blue 83, Disperse Blue 87, Disperse Blue 104, Disperse Blue 109, Disperse Blue 118, Disperse Blue 127, Disperse Blue 134, Disperse Blue 377, Acid Violet 41, Acid violet 42, Acid violet 43, Acid violet 48, Acid violet 51, Acid Green 25, Acid Blue 23, Acid blue 25, Acid Blue 27, Acid blue 40, Acid Blue 43, Acid Blue 47, Acid Blue 49, Acid Blue 51, Acid Blue 53, Acid Blue 55, Acid Blue 56, Acid Blue 62, Acid Blue 68, Acid Blue 69, Acid Blue 78, Acid Blue 80, Acid Blue 81:1, Acid Blue, Acid Blue 96, Acid Blue 124, Acid Blue 128, Acid Blue 129, Acid Blue 175, Acid Blue 215, Acid Blue 230, Acid Blue 277, Acid Green 25 et Acid Green 41 ; et de préférence un ou plusieurs de Acid green 25, Acid blue 80, solvent Violet 13, Disperse Violet 28 et Acid Violet 43.

**5.** Récipient en plastique transparent comprenant une composition de détergent de lessive liquide aqueuse selon l'une quelconque des revendications précédentes, dans lequel l'amylase comprend une ou plusieurs amylases selon :

a) amylases présentant SEQ ID NO:2 comme décrit dans WO 95/10603 ou des variants ayant 90 % d'identité de séquence par rapport à SEQ ID NO:2.
b) alpha-amylase hybride comprenant des résidus 1-33 de l'alpha-amylase dérivée de *B. amyloliquefaciens* représenté dans SEQ ID NO:6 de WO 2006/066594, des résidus 36-483 de l'alpha-amylase *B. licheniformis* représentée dans SEQ ID NO:4 de WO 2006/066594 ou des variants ayant 90 % d'identité de séquence de celle-ci.
c) amylases présentant SEQ ID NO:6 dans WO 99/019467 ou des variants de celles-ci ayant 90 % d'identité de séquence par rapport à SEQ ID NO:6.
d) amylases présentant SEQ ID NO:2 de WO 08/153815 ou SEQ ID NO:10 de WO 01/66712 ou des variants de celles-ci présentant 90 % d'identité de séquence par rapport auxdites séquences.
e) amylases présentant SEQ ID NO:2 de WO 09/061380 ou des variants présentant 90 % d'identité de séquence par rapport à SEQ ID NO:2 de celles-ci.
f) alpha-amylase présentant SEQ ID NO:12 dans WO 01/66712 ou un variant présentant au moins 90 % d'identité de séquence par rapport à SEQ ID NO:12.

**6.** Récipient en plastique transparent comprenant une composition de détergent de lessive liquide aqueuse selon l'une quelconque des revendications précédentes, dans lequel la protéase est une sérine protéase et de préférence une sérine protéase de type subtilase.

**7.** Récipient en plastique transparent comprenant une composition de détergent de lessive liquide aqueuse selon l'une quelconque des revendications précédentes, comprenant de plus de 0,001 à 0,1 % en masse de séquestrant, dans lequel le logarithme décimal, c'est-à-dire, $log_{10}$, de la constante de liaison à $Fe^{3+}$ du séquestrant est d'au moins 19,0, de préférence dans une quantité de 0,002 à 0,05 % en masse, encore mieux de 0,005 à 0,04 % en masse, bien mieux encore de 0,01 à 0,03 % en masse.

**8.** Récipient en plastique transparent comprenant une composition de détergent de lessive liquide aqueuse selon la revendication 7, dans lequel le logarithme décimal de la constante de liaison à $Fe^{3+}$ est de 20,0 à 45,0, de préférence de 21,0 à 40,0, encore mieux de 22,0 à 36,0 et bien mieux encore de 23,0 à 35,0.

**9.** Récipient en plastique transparent comprenant une composition de détergent de lessive liquide aqueuse selon l'une quelconque des revendications précédentes, dans lequel le plastique du récipient comprend de 50 à 100 % en masse, de préférence de 80 à 100 % en masse et encore mieux de 90 à 100 % en masse de plastique recyclé, sur la base de la masse totale du plastique du récipient.

**10.** Récipient en plastique transparent comprenant une composition de détergent de lessive liquide aqueuse selon l'une quelconque des revendications précédentes, dans lequel le plastique du récipient comprend de 0,01 à 6 % en masse, de préférence de 0,1 à 5 % en masse et encore mieux de 1 à 4,5 % en masse d'absorbeur UV, sur la base de la masse totale du récipient.

**11.** Récipient en plastique transparent comprenant une composition de détergent de lessive liquide aqueuse selon l'une quelconque des revendications précédentes, dans lequel le détergent de lessive liquide aqueuse présente un pH de 5 à 9, de préférence de 6 à 8, comme mesuré à 293K.

**12.** Récipient en plastique transparent comprenant une composition de détergent de lessive liquide aqueuse selon l'une quelconque des revendications précédentes, dans lequel le plastique du récipient comprend du poly(éthylène téréphtalate) (PET), polyéthylène haute densité (HDPE) ou une combinaison de ceux-ci et de préférence du poly(éthylène téréphtalate) (PET).

**13.** Récipient en plastique transparent comprenant une composition de détergent de lessive liquide aqueuse selon l'une quelconque des revendications précédentes, dans lequel le récipient est une bouteille ayant un volume interne de 0,2 à 5 L et de préférence de 0,5 à 2 L.

**14.** Récipient en plastique transparent comprenant une composition de détergent de lessive liquide aqueuse selon l'une quelconque des revendications précédentes, dans lequel au moins 30 %, de préférence au moins 50 %, encore mieux au moins 70 % et bien mieux encore au moins 85 % de la surface externe de récipient sont transparents.

**15.** Procédé pour la fabrication d'un récipient en plastique transparent comprenant une composition de détergent de lessive liquide aqueuse selon l'une quelconque des revendications précédentes, dans lequel le procédé comprend les étapes de :

a) fourniture d'un récipient transparent en plastique, présentant un volume interne de 0,1 à 10 L, dans lequel le plastique comprend de préférence de 50 à 100 % en masse de plastique recyclé, sur la base de la masse totale du plastique ;
b) fourniture d'une composition de détergent de lessive liquide aqueuse selon l'une quelconque des revendications précédentes ;
c) remplissage du récipient fourni dans l'étape a) avec la composition de détergent de lessive liquide aqueuse fournie dans l'étape b), pour fournir le récipient en plastique transparent comprenant une composition de détergent de lessive liquide aqueuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20070267444 A1
- WO 0036068 A
- GB 1296839 A
- WO 95026397 A
- WO 00060060 A
- WO 9510603 A
- WO 9402597 A
- WO 9418314 A
- WO 9743424 A
- WO 99019467 A
- WO 02010355 A
- WO 2006066594 A
- WO 96023873 A
- WO 08153815 A
- WO 0166712 A
- WO 09061380 A
- WO 2011098531 A
- WO 2013001078 A
- WO 2013001087 A
- US 7262042 B
- WO 09021867 A
- WO 8906279 A
- WO 9318140 A
- US 6312936 B1
- US 5679630 A
- US 4760025 A
- WO 92175177 A
- WO 01016285 A
- WO 02026024 A
- WO 02016547 A
- WO 8906270 A
- WO 9425583 A
- WO 05040372 A
- WO 05052161 A
- WO 05052146 A
- WO 9219729 A
- WO 96034946 A
- WO 9820115 A
- WO 9820116 A
- WO 99011768 A
- WO 0144452 A
- WO 03006602 A
- WO 0403186 A
- WO 04041979 A
- WO 07006305 A
- WO 11036263 A
- WO 11036264 A
- US 5352604 A
- WO 9219709 A
- WO 9219708 A
- WO 2007042140 A
- WO 15028395 A
- EP 328177 A
- EP 070074 A
- EP 346995 A
- US 20050130859 A1
- US 20080234169 A


### Non-patent literature cited in the description


- **RAHIMI.** Chemical recycling of waste plastics for new materials production. *Nature Reviews Chemistry,* 2017, vol. 1, 0046
- Industrial Dyes: Chemistry, Properties, Applications. Wiley-VCH, 2003
- **SIEZEN et al.** *Protein Engng,* 1991, vol. 4, 719-737
- **SIEZEN et al.** *Protein Science,* 1997, vol. 6, 501-523
- **R.M. SMITH ; A.E. MARTELL.** NIST Standard Reference Database 46, NIST Critically Selected Stability Constants of Metal Complexes: Version 8.0. U.S. Department of Commerce, Technology Administration, NIST, May 2004
- Inorganic Chemetal-ion sequestrantry in Biology and Medicine. **RAYMOND.** ACS Symposium Series, Washington, D.C. 1980
- **ORAMA.** Complexation of [S,S] and mixed stereoisomers of N,N'-ethylenediaminedisuccinic acid (EDDS) with FE(III), Cu(II), Zn(II) and Mn(II) ions in aqueous solution. *J. Chem. Soc., Dalton Trans.,* 2002, 4644-4648
- Inorganic Chemistry in Biology and Medicine. **RAYMOND et al.** ACS Symposium Series, Washington, D.C. 1980
- **SCHWARTZ ; PERRY.** Surface Active Agents. Interscience, 1949, vol. 1
- **SCHWARTZ ; PERRY ; BERCH.** Surface Active Agents. Interscience, 1958, vol. 2

- McCutcheon's Emulsifiers and Detergents. Manufacturing Confectioners Company
- **H. STACHE.** Tenside-Taschenbuch. Carl Hauser Verlag, 1981
- International Buyers Guide. CFTA Publications and OPD, 1992
- Chemicals Buyers Directory. Schnell Publishing Co, 1993
- **POUCHER.** *Journal of the Society of Cosmetic Chemists,* 1955, vol. 6 (2), 80
- **RAHIMI.** Chemical recycling of waste plastics for new materials production. *Nature Reviews Chemistry,* 2017, vol. 1 (0046
- Benzotriazoles: History, Environmental Distribution, and Potential Ecological Effects. **CANTWELL.** Comprehensive Analytical Chemistry. 2015, vol. 67, 513-545
- **POSPISIL.** Oxidation Inhibition in Organic Materials. CRC Press, 1990
- **M.E. GRIGORE.** Methods of Recycling, Properties and Applications of Recycled Thermoplastic Polymers. *Recycling,* 2017, vol. 2, 24
- **HANS-GEORG ELIAS.** *An introduction to plastics,* 1993